# EUROPEAN PATENT APPLICATION

(11) **EP 4 700 941 A1**
(43) Date of publication of application: **25.02.2026**
(21) Application number: 25196768.3
(22) Date of filing: 19.08.2025
(51) Int. Cl.: H01M 50/242, H01M 10/04, H01M 50/293, H01M 50/291, H01M 50/207

(54) **BATTERY MODULE**

(30) Priority: 22.08.2024 KR 20240113074
(71) Applicant: SAMSUNG SDI CO., LTD., Yongin-si, Gyeonggi-do 17084 (KR)
(72) Inventor: KIM, Jin Mun, Suwon-si, Gyeonggi-do 16678 (KR); LEE, Chan Hyung, Suwon-si, Gyeonggi-do 16678 (KR); LEE, Byeong Gwan, Suwon-si, Gyeonggi-do 16678 (KR); CHOI, Hui Ju, Suwon-si, Gyeonggi-do 16678 (KR); KANG, Su Hyeon, Suwon-si, Gyeonggi-do 16678 (KR)
(74) Representative: Gulde & Partner

(57) **Abstract**

A battery module includes a plurality of battery cells, a housing accommodating the plurality of battery cells, and a damper located on a side of at least one of the plurality of battery cells and including a non-Newtonian fluid material.

## Description

### BACKGROUND

### 1. Field

Aspects of embodiments of the present invention relate to a battery module.

### 2. Description of the Related Art

Unlike a primary battery that cannot be recharged, a secondary battery is a battery that can be charged and discharged. A low-capacity battery may be used for portable small-sized electronic devices, such as smartphones, feature phones, notebook computers, digital cameras, and camcorders, and a high-capacity battery is widely used as a power source for driving a motor and a power storage battery in hybrid vehicles, electric vehicles, or the like. Such a battery includes electrodes including a positive electrode and/or a negative electrode, an electrode assembly including the electrodes, a case that accommodates the electrode assembly, electrode terminals connected to the electrode assembly, and the like.

As technology advances, batteries with high capacity are desired. Accordingly, a plurality of batteries may be electrically connected and used. For example, the batteries may be applied to an electronic device in the form of a battery module including a plurality of batteries, and/or a battery pack including a plurality of battery modules. In this case, the electronic device is an electronic device that requires high power and/or high capacity and may include, for example, an electric vehicle or the like.

A battery module includes a plurality of battery cells and a housing accommodating the plurality of battery cells. In addition, the battery module may further include bus bars electrically connecting at least some of the plurality of battery cells.

An electrode assembly included in each of the battery cells may repeatedly contract or expand due to charging and discharging, and the battery cells may swell during this process. If the battery cell swells, the battery cell may increase in volume.

In this case, the housing that accommodates the battery cells may also expand in volume accordingly. Further, as the housing expands, problems such as collisions with external structures or breakage may occur. The bus bars connecting the battery cells may also break as the battery cells expand in volume.

In this case, not only could the battery module itself break, but also a safety issue may arise due to the battery module.

The above-described information disclosed in the background technology of the present invention is provided to improve understanding of the background of the present invention and thus may include information that does not form the related art.

### SUMMARY

According to an aspect of embodiments of the present invention, a battery module that addresses the above-described problems, for example, is provided.

According to an aspect of embodiments of the present invention, a battery module of which a volume does not expand, or expands minimally even if a battery cell swells, is provided.

According to an aspect of embodiments of the present invention, a battery module that prevents a bus bar from breaking, even when a battery cell swells, is provided.

According to an aspect of embodiments of the present invention, a battery module having an insulating effect is provided.

However, aspects and problems to be solved by the present invention are not limited to the above-mentioned aspects and problems to be solved, and other aspects and problems to be solved not mentioned can be clearly understood by those skilled in the art from the following description.

According to one or more embodiments of the present invention, a battery module includes a plurality of battery cells, a housing accommodating the plurality of battery cells, and a damper located on a side of at least one of the plurality of battery cells and including a non-Newtonian fluid material.

### BRIEF DESCRIPTION OF THE DRAWINGS

The following drawings appended to the present specification are provided to illustrate some example embodiments of the present invention, and the present invention will be more clearly understood from the accompanying drawings together with the following description of the invention.
FIGS. 1 to 4 are schematic views each illustrating a battery cell according to an embodiment;
FIG. 5 is a view illustrating a battery module according to an embodiment of the present invention;
FIG. 6 is a view for describing a battery module according to an embodiment of the present invention;
FIG. 7 is a view for describing an example of swollen battery cells according to an embodiment of the present invention;
FIG. 8 is a view for describing an example of a damper according to an embodiment of the present invention;
FIGS. 9A and 9B are views for describing a size of the damper according to an embodiment of the present invention; and
FIG. 10 is a view for describing an example of the damper according to an embodiment of the present invention.

### DETAILED DESCRIPTION

Herein, some embodiments of the present invention will be described in further detail. The present invention is set out in the appended set of claims, wherein the drawings and respective description relate to advantageous embodiments thereof.

Terms or words used in this specification and claims are not to be interpreted as being limited to ordinary or dictionary meanings and are to be interpreted as having meanings and concepts consistent with the technical idea of this invention based on the principle that the inventor can properly define the concept of the term in order to describe his or her invention in the best way. Accordingly, it is to be understood that the embodiments described herein, and the configurations illustrated in the drawings are only some example embodiments of the invention and do not necessarily represent all of the technical ideas of the invention, and that there may be various equivalents and modifications that may be replace for them at the time of filing. Further, when used herein, the words "comprise," "include," "comprising," and/or "including" specify the presence of the mentioned shapes, numbers, steps, operations, members, elements, and/or groups thereof and are not intended to exclude the presence or addition of one or more other shapes, numbers, operations, members, elements, and/or groups thereof.

Unless otherwise specified herein, when a part, such as a layer, a film, an area, or a plate, is described as being "on" another part, this includes not only a case in which the part is directly on another part, but also a case in which one or more other parts are present therebetween.

Unless otherwise specified herein, a singular expression may also include a plural meaning. In addition, unless otherwise specified, "A or B" may mean "including A, including B, or including A and B."

As used herein, "a combination thereof" may mean a mixture, a laminate, a composite, a copolymer, an alloy, a blend, a reaction product, and the like of components.

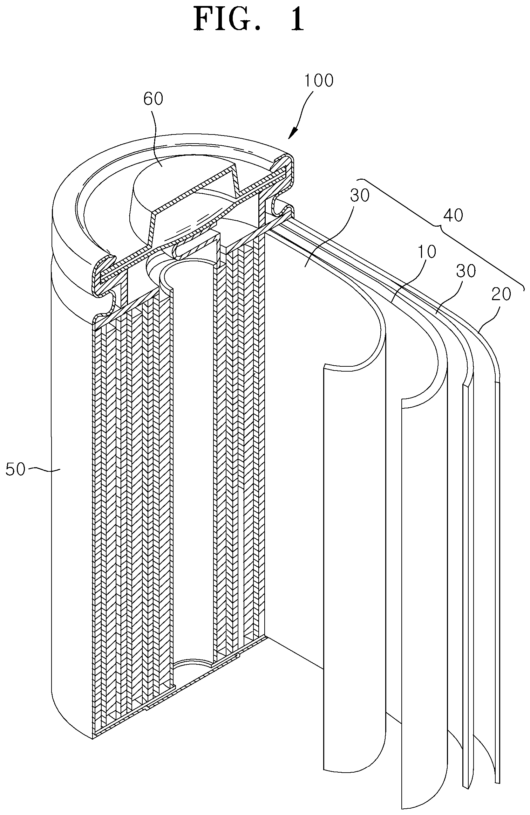

FIGS. 1 to 4 are schematic views each illustrating a battery cell according to an embodiment.

### Battery cell 100

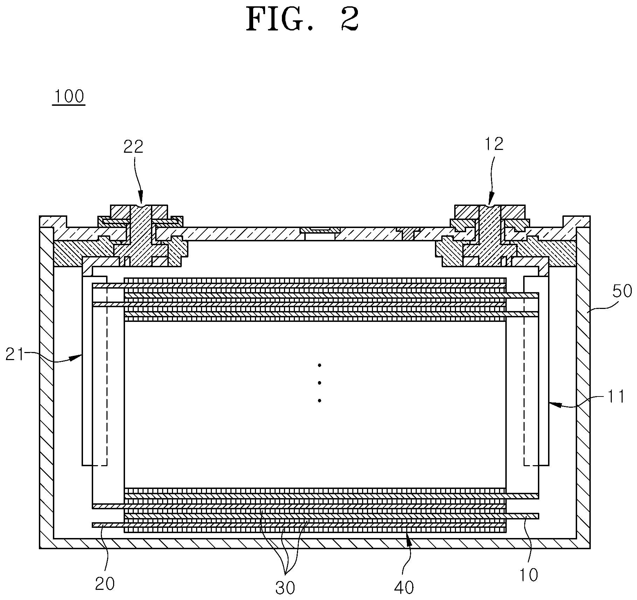

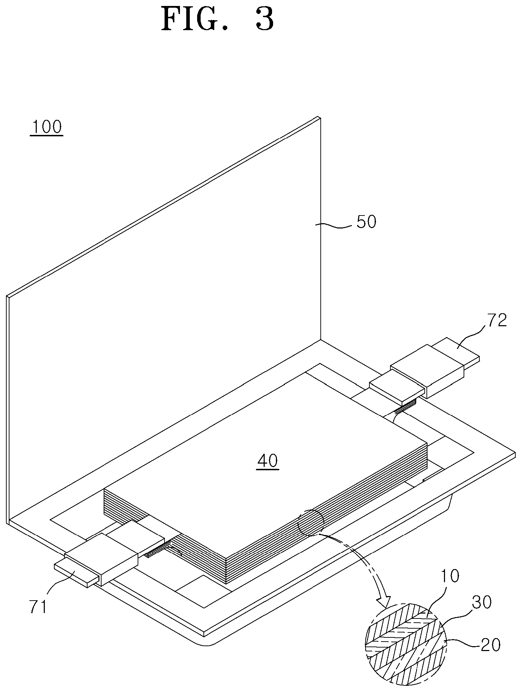

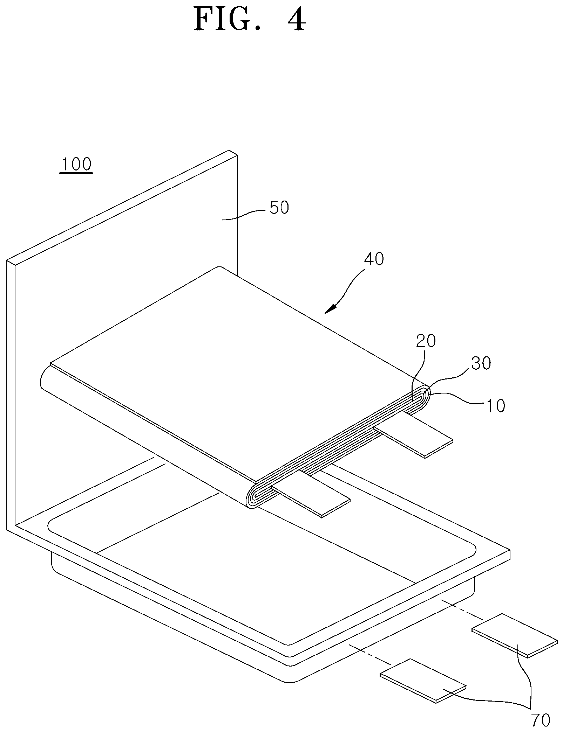

A battery cell 100 may be classified as any of a cylindrical, prismatic, pouch-type, and coin-type battery, according to a shape thereof. FIGS. 1 to 4 are schematic views each illustrating the battery cell according to an embodiment, where FIG. 1 illustrates a cylindrical battery, FIG. 2 illustrates a prismatic battery, and FIGS. 3 and 4 illustrate pouch-type batteries. Referring to FIGS. 1 to 4, the battery cell 100 may include an electrode assembly 40 including a separator 30 interposed between a positive electrode 10 and a negative electrode 20, and a case 50 in which the electrode assembly 40 is housed. The positive electrode 10, the negative electrode 20, and the separator 30 may be impregnated with an electrolyte (not shown). As shown in FIG. 1, the battery cell 100 may include a sealing member 60 that seals the case 50. In addition, in FIG. 2, the battery cell 100 may include a positive electrode lead tab 11, a positive electrode terminal 12, a negative electrode lead tab 21, and a negative electrode terminal 22. As shown in FIGS. 3 and 4, the battery cell 100 may include electrode tabs 70, that is, a positive electrode tab 71 and a negative electrode tab 72, which function as electrical paths for inducing a current formed in the electrode assembly 40 to the outside.

### Positive electrode active material

As a positive electrode active material, a compound (e.g., a lithiated intercalation compound) that is capable of reversible intercalation and deintercalation of lithium may be used. In an embodiment, one or more of a composite oxide of lithium and a metal selected from cobalt, manganese, nickel, and a combination thereof may be used.

The composite oxide may be a lithium-transition metal composite oxide, and examples thereof may include lithium nickel-based oxide, lithium cobalt-based oxide, lithium manganese-based oxide, lithium iron phosphate-based compound, cobalt-free nickel manganese-based oxide, or a combination thereof.

As an example, compounds represented by any one of the following chemical formulas may be used. LiaA1-bXbO2-cDc (0.90≤a≤1.8, 0≤b≤0.5, 0≤c≤0.05); LiaMn2-bXbO4-cDc (0.90≤a≤1.8, 0≤b≤0.5, 0≤c≤0.05); LiaNi1-b-cCobXcO2-αDα (0.90≤a≤1.8, 0≤b≤0.5, 0≤c≤0.5, 0<α<2); LiaNil-b-cMnbXcO2-αDa (0.90≤a≤1.8, 0≤b≤0.5, 0≤c≤0.5, O<α<2); LiaNibCocL1dGeO2 (0.90≤a≤1.8, 0≤b≤0.9, 0≤c≤0.5, 0≤d≤0.5, 0≤e≤0.1); LiaNiGbO2 (0.90≤a≤1.8, 0.001≤b≤0.1); LiaCoGbO2 (0.90≤a≤1.8, 0.001≤b≤0.1); LiaMn1-bGbO2 (0.90≤a≤1.8, 0.001≤b≤0.1); LiaMn2GbO4 (0.90≤a≤1.8, 0.001≤b≤0.1); LiaMn1-gGgPO4 (0.90≤a≤1.8, 0≤g≤0.5); Li(3-f)Fe2(PO4)3 (0≤f≤2); and LiaFePO4 (0.90≤a≤1.8).

In the above chemical formulas, A is Ni, Co, Mn, or a combination thereof; X is Al, Ni, Co, Mn, Cr, Fe, Mg, Sr, V, a rare-earth element or a combination thereof; D is O, F, S, P, or a combination thereof; G is Al, Cr, Mn, Fe, Mg, La, Ce, Sr, V, or a combination thereof; and L1 is Mn, Al, or a combination thereof.

As an example, the positive electrode active material may be a high-nickel-based positive electrode active material having a nickel content greater than or equal to 80 mol %, greater than or equal to 85 mol %, greater than or equal to 90 mol %, greater than or equal to 91 mol %, or greater than or equal to 94 mol % and less than or equal to 99 mol % based on 100 mol % of the metal excluding lithium in the lithium-transition metal composite oxide. The high-nickel-based positive electrode active material may be capable of realizing high capacity and can be applied to high-capacity and high-density battery cells.

### Positive electrode 10

The positive electrode 10 for the battery cell 100 may include a current collector and a positive electrode active material layer formed on the current collector. The positive electrode active material layer includes a positive electrode active material and may further include a binder and/or a conductive material.

As an example, the positive electrode may further include an additive that can function as a sacrificial positive electrode.

In an embodiment, a content of the positive electrode active material may be 90 wt% to 99.5 wt% based on 100 wt% of the positive electrode active material layer, and a content of each of the binder and the conductive material may be 0.5 wt% to 5 wt% based on 100 wt% of the positive electrode active material layer.

The binder bonds positive electrode active material particles to each other well and also adheres the positive electrode active material to the current collector well. Representative examples of the binder include polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, an epoxy resin, a (meth)acrylic resin, a polyester resin, nylon, or the like, but the present invention is not limited thereto.

The conductive material provides conductivity to the electrode, and any suitable material that does not cause a chemical change and is electrically conductive may be used in the configured battery. Examples of the conductive material may include a carbon-based material, such as natural graphite, artificial graphite, carbon black, acetylene black, Ketjen black, carbon fibers, carbon nanofibers, or carbon nanotubes; a metal-based material in the form of a metal powder or metal fiber including copper, nickel, aluminum, silver, or the like; a conductive polymer, such as a polyphenylene derivative; or a mixture thereof.

In an embodiment, Al may be used as the current collector, but the present invention is not limited thereto.

### Negative electrode active material

The negative electrode active material may be a material that reversibly intercalates/deintercalates lithium ions, a lithium metal, a lithium metal alloy, a material capable of doping and dedoping lithium, or a transition metal oxide.

In an embodiment, the material capable of reversible intercalation and deintercalation of lithium ions is a carbon-based negative electrode active material, and may include, for example, crystalline carbon, amorphous carbon, or a combination thereof. Examples of the crystalline carbon may include graphite, such as amorphous, plate-shaped, flake-shaped, spherical-shaped or fiber-shaped natural graphite or artificial graphite. Examples of the amorphous carbon may include soft carbon or hard carbon, a mesophase pitch carbide product, calcined coke, and the like.

The lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn.

A Si-based negative electrode active material or a Sn-based negative electrode active material may be used as the material capable of doping and dedoping lithium. The Si-based negative electrode active material may include any of silicon, a silicon-carbon composite, SiOx (0<x≤2), a Si-Q alloy (where, Q is selected from an alkali metal, an alkaline-earth metal, a Group 13 element, a Group 14 element (excluding Si), a Group 15 element, a Group 16 element, a transition metal, a rare-earth element, and a combination thereof), or a combination thereof. The Sn-based negative electrode active material may include Sn, SnO2, a Sn-based alloy, or a combination thereof.

The silicon-carbon composite may be a composite of silicon and amorphous carbon. According to an embodiment, the silicon-carbon composite may be in the form of silicon particles and amorphous carbon coated on the surface of the silicon particles. For example, the silicon-carbon composite may include a secondary particle (core) in which silicon primary particles are agglomerated and an amorphous carbon coating layer (shell) located on the surface of the secondary particle. The amorphous carbon may also be located between the silicon primary particles, such that, for example, the silicon primary particles are coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer located on a surface of the core.

The Si-based negative electrode active material or the Sn-based negative electrode active material may be used by being mixed with a carbon-based negative electrode active material.

### Negative electrode 20

The negative electrode 20 for the battery cell 100 includes a current collector and a negative electrode active material layer located on the current collector. The negative electrode active material layer includes a negative electrode active material and may further include a binder and/or a conductive material.

In an embodiment, for example, the negative electrode active material layer may include 90 wt% to 99 wt% of the negative electrode active material, 0.5 wt% to 5 wt% of the binder, and 0 wt% to 5 wt% of the conductive material.

The binder bonds negative electrode active material particles to each other well and also adheres the negative electrode active material to the current collector well. Examples of the binder may include a non-aqueous binder, an aqueous binder, a dry binder, or a combination thereof.

In an embodiment, the non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluororubber, a polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

If the aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be used in combination. In an embodiment, Na, K, or Li can be used as the alkali metal.

The dry binder is a polymer material capable of being fiberized, and may be, for example, polytetrafluoroethylene, polyvinylidene fluoride, a polyvinylidene fluoride-hexafluoropropylene copolymer, a polyethylene oxide, or a combination thereof.

The conductive material provides conductivity to the electrode, and any suitable material that does not cause a chemical change and is electrically conductive may be used in the configured battery. Examples of the conductive material may include a carbon-based material, such as natural graphite, artificial graphite, carbon black, acetylene black, Ketjen black, carbon fibers, or carbon nanofibers; a metal-based material in the form of a metal powder or metal fiber including copper, nickel, aluminum, silver, or the like; a conductive polymer, such as a polyphenylene derivative; or a mixture thereof.

The negative electrode current collector may be selected from any of a copper foil, a nickel foil, a stainless steel foil, a titanium foil, a nickel foam, a copper foam, a polymer substrate coated with a conductive metal, and a combination thereof.

### Electrolyte (not shown)

The electrolyte for the battery cell 100 includes a non-aqueous organic solvent and a lithium salt.

The non-aqueous organic solvent functions as a medium through which ions taking part in the electrochemical reaction of a battery can move.

The non-aqueous organic solvent may be a carbonate-based, ester-based, ether-based, ketone-based, alcohol-based solvent, aprotic solvent, or a combination thereof.

The carbonate-based solvent may include any of dimethyl carbonate (DMC), diethyl carbonate (DEC), dipropyl carbonate (DPC), methylpropyl carbonate (MPC), ethylpropyl carbonate (EPC), ethylmethyl carbonate (MEC), ethylene carbonate (EC), propylene carbonate (PC), butylene carbonate (BC), and the like.

The ester-based solvent may include any of methyl acetate, ethyl acetate, n-propyl acetate, dimethyl acetate, methyl propionate, ethyl propionate, decanolide, mevalonolactone, valerolactone, caprolactone, and the like.

The ether-based solvent may include any of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone and the like. The alcohol-based solvent may include ethyl alcohol, isopropyl alcohol, and the like, and the aprotic solvent may include nitriles such as R-CN (where R is a C2 to C20 linear, branched, or cyclic hydrocarbon group and includes a double bond, an aromatic ring, or an ether bond), and the like; amides such as dimethyl formamide; dioxolanes such as 1,3-dioxolane and 1,4-dioxolane; sulfolanes; and the like.

The non-aqueous organic solvents may be used alone or in combination of two or more.

In an embodiment, if a carbonate-based solvent is used, a cyclic carbonate and a chain carbonate may be mixed and used, and the cyclic carbonate and the chain carbonate may be mixed in a volume ratio of 1:1 to 1:9.

The lithium salt is a material that is dissolved in the organic solvent and serves as a source of lithium ions in a battery, enables a basic operation of a battery cell, and improves the movement of the lithium ions between positive and negative electrodes. Representative examples of the lithium salt may include one or two or more selected from among LiPF6, LiBF4, LiSbF6, LiAsF6, LiClO4, LiAlO2, LiAlCl4, LiPO2F2, LiCl, Lil, LiN(SO3C2F5)2, Li(FSO2)2N (lithium bis(fluorosulfonyl)imide, LiFSI), LiC4F9SO3, LiN(CxF2x+1SO2)(CyF2y+1SO2) (where, x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

### Separator 30

Depending on a type of the battery cell 100, the separator 30 may be present between the positive electrode 10 and the negative electrode 20. The separator 30 may include polyethylene, polypropylene, polyvinylidene fluoride, or a multilayer film of two or more layers thereof, and, in an embodiment, may include a mixed multilayer film, such as a polyethylene/polypropylene two-layer separator, a polyethylene/polypropylene/polyethylene three-layer separator, a polypropylene/polyethylene/polypropylene three-layer separator, or the like.

The separator 30 may include a porous substrate and a coating layer including an organic material, an inorganic material, or a combination thereof located on one surface or both, or opposite, surfaces of the porous substrate.

The porous substrate may be a polymer film formed of a polymer, or a copolymer or a mixture of two or more selected from polyolefins such as polyethylene, polypropylene, and the like, polyesters such as polyethylene terephthalate, polybutylene terephthalate, and the like, polyacetal, polyamide, polyimide, polycarbonate, polyetheretherketone, polyaryletherketone, polyetherimide, polyamideimide, polybenzimidazole, polyether sulfone, a polyphenylene oxide, a cyclic olefin copolymer, polyphenylene sulfide, polyethylene naphthalate, glass fibers, and polytetrafluoroethylene (e.g., Teflon).

The organic material may include a polyvinylidene fluoride-based polymer or a (meth)acrylic-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the present invention is not limited thereto.

The organic and inorganic materials may be present by being mixed in one coating layer or may be present in a form in which a coating layer including organic materials and a coating layer including inorganic materials are stacked.

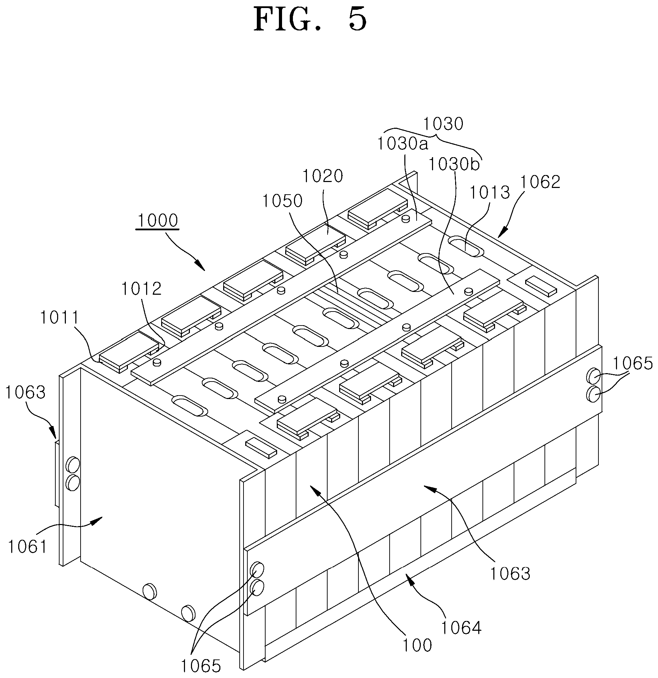

FIG. 5 is a view illustrating a battery module according to an embodiment of the present invention;

A battery module 1000 according to an embodiment of the present invention includes a plurality of battery cells 100, a housing 1061, 1062, 1063, 1064, and 1065 in which the plurality of battery cells 100 are accommodated, and bus bars that electrically connect at least some of the plurality of battery cells 100.

The plurality of battery cells 100 may include, for example, the battery cell described in FIGS. 1 to 4 and may be accommodated by being arranged in a direction in the housing 1061 to 1065.

The housing 1061 to 1065 may include a pair of end plates 1061 and 1062 facing a wide surface of each of the battery cells 100, and side plates 1063 and a bottom plate 1064 that connect the pair of end plates 1061 and 1062. The side plate 1063 may support a side surface of each of the battery cells 100, and the bottom plate 1064 may support a bottom surface of each of the battery cells 100. In addition, the pair of end plates 1061 and 1062, the side plate 1063, and the bottom plate 1064 may be connected to each other by members, such as bolts 1065 or the like.

The battery module 1000 includes terminal portions 1011 and 1012, connection tabs 1020 each connecting adjacent battery cells 100, and a protection circuit module 1030 having a side end portion connected to the connection tabs 1020. The protection circuit module 1030 may be a battery management system (BMS). In an embodiment, the connection tabs 1020 may be bus bars.

The terminal portions 1011 and 1012, which are electrically connected to the connection tab 1020, and a vent 1013, which is an exhaust path for a gas generated inside, may be provided on a side of the battery cell 100. The terminal portions 1011 and 1012 of the battery cell 100 may be a positive electrode terminal 1011 and a negative electrode terminal 1012 having different polarities, and the terminal portions 1011 and 1012 of the battery cells 100 adjacent to each other may be electrically connected in series or in parallel by the connection tab 1020 to be described below. Although a series connection has been described above as an example, the present invention is not limited to such a structure, and various connection structures may be adopted as desired. In addition, a number and arrangement of the battery cells are not limited to the structure shown in FIG. 5 and may be varied as desired.

The protection circuit module 1030 may include electronic components, protection circuits, and the like mounted therein and may be electrically connected to the connection tabs 1020 to be described below. In an embodiment, the protection circuit module 1030 includes a first protection circuit module 1030a and a second protection circuit module 1030b extending at different positions in a direction in which the plurality of battery cells 100 are arranged, and, in an embodiment, the first protection circuit module 1030a and the second protection circuit module 1030b may be spaced apart from each other at a distance (e.g., a predetermined distance) and located parallel to each other, and may each be electrically connected to the adjacent connection tabs 1020. For example, the first protection circuit module 1030a may be formed to extend on a side of an upper portion of each of the plurality of battery cells 100 in the direction in which the plurality of battery cells 100 are arranged. In addition, the second protection circuit module 1030b is formed to extend on another side of the upper portion of each of the plurality of battery cells 100 in the direction in which the plurality of battery cells 100 are arranged, and may be located to be spaced apart from the first protection circuit module 1030a at a distance (e.g., a predetermined distance) with the vents 1013 interposed therebetween and disposed parallel to the first protection circuit module 1030a. As described above, the two protection circuit modules may be disposed in parallel to be spaced apart from each other in the direction in which the plurality of battery cells 100 are arranged, thereby minimizing or reducing an area of a printed circuit board (PCB) constituting the protection circuit module 1030. By configuring the protection circuit module 1030 separately into two protection circuit modules, an unnecessary PCB area may be minimized or reduced. In addition, the first protection circuit module 1030a and the second protection circuit module 1030b may be connected to each other by a connecting member 1050 having conductivity. In this case, a side of the connecting member 1050 may be connected to the first protection circuit module 1030a, and another side thereof may be connected to the second protection circuit module 1030b, thereby allowing an electrical connection between the two protection circuit modules.

In an embodiment, the connection may be performed by any of soldering, resistance welding, laser welding, and projection welding methods.

In an embodiment, the connecting member 1050 may be, for example, an electrical wire. In an embodiment, the connecting member 1050 may be made of an elastic or flexible material. With the connecting member 1050, whether the voltage, temperature, and current of the plurality of battery cells 100 are normal may be checked and managed. That is, information, such as voltage, current, and temperature, received by the first protection circuit module 1030a from the connection tabs adjacent to the first protection circuit module 1030a and information, such as voltage, current, and temperature, received by the second protection circuit module 1030b from the connection tabs adjacent to the second protection circuit module 1030b may be integrated and managed by the protection circuit module through the connecting member.

If the battery cell 100 swells, an impact may be absorbed by the elasticity or flexibility of the connecting member 1050, thereby preventing damage to the protection circuit modules 1030.

However, a shape and structure of the connecting member 1050 are not limited to those shown in FIG. 5.

As described above, as the protection circuit module 1030 is comprised of the first and second protection circuit modules 1030a and 1030b, the area of the PCB constituting the protection circuit module can be minimized or reduced, thereby securing a space inside the battery module. This may improve work efficiency by facilitating not only a coupling work of connecting the connection tab 1020 and the protection circuit module 1030, but also a repair work if an abnormality is detected in the battery module.

The battery cell 100 according to an embodiment of the present invention has been described with reference to FIGS. 1 to 4. In addition, the battery module 1000 according to an embodiment of the present invention including the plurality of battery cells 100 has been described with reference to FIG. 5.

As described above, the battery cell 100 includes electrodes (e.g., a positive electrode and a negative electrode). The electrodes repeatedly contract or expand due to charging or discharging. Accordingly, the electrodes may swell. In this case, the battery cell 100 including the electrodes may swell.

The battery module 1000 includes the plurality of battery cells 100. If all or some of the plurality of battery cells 100 swell, the battery module 1000 may also expand in volume. Accordingly, the housing accommodating the plurality of battery cells 100 may be damaged or the bus bars electrically connecting at least some of the plurality of battery cells 100 may be damaged.

In this case, the battery module 1000 may be damaged. Further, if a safety issue arises as the battery cell 100 swells, heat propagation may occur between the battery cells 100, which may amplify the swelling phenomenon.

Accordingly, herein, one or more embodiments of the present invention to prevent the battery module 1000 from being damaged even if the battery cell 100 swells will be described. In addition, one or more embodiments of the present invention to prevent heat propagation between the battery cells 100 and to prevent the battery cells 100 from undergoing chain swelling caused by heat, even if a thermal runaway occurs in at least one of the plurality of battery cells 100, will be described.

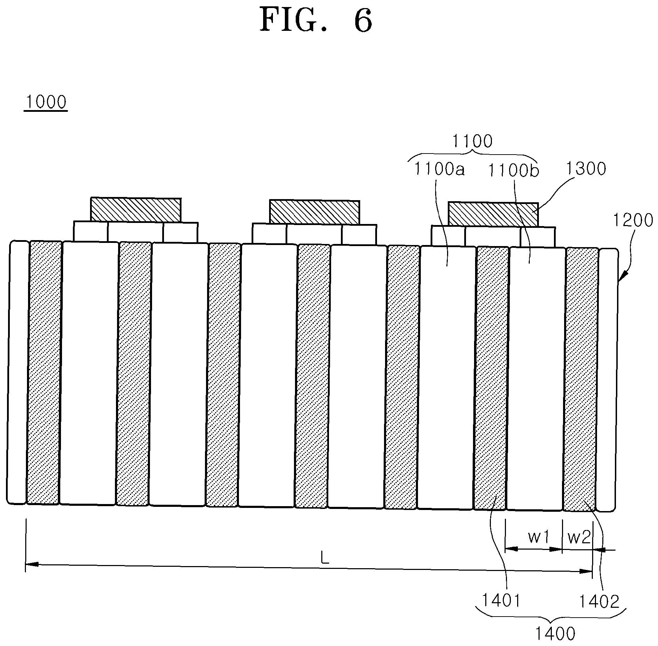

FIG. 6 is a view for describing a battery module according to an embodiment of the present invention.

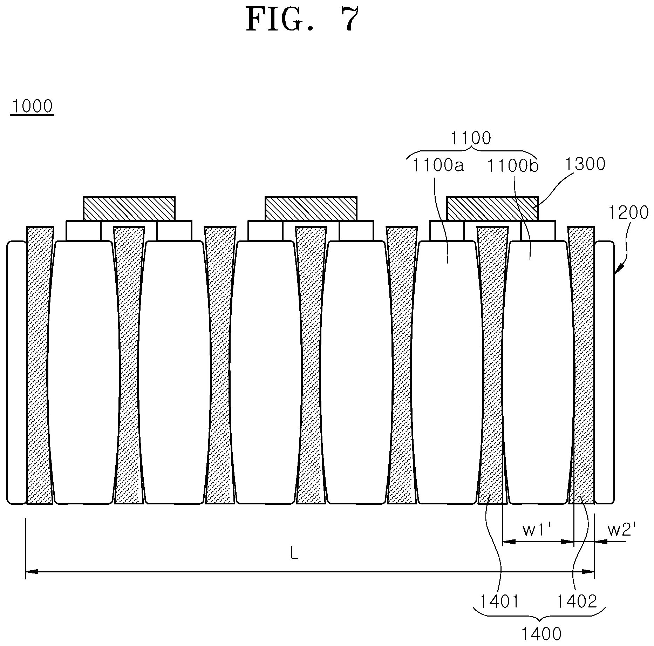

FIG. 7 is a view for describing an example of swollen battery cells according to an embodiment of the present invention.

In FIGS. 6 and 7, "1000" denotes a battery module according to an embodiment of the present invention (e.g., including the battery module 1000 described in FIG. 5).

The battery module 1000 includes a plurality of battery cells 1100, a housing 1200 that accommodates the plurality of battery cells 1100, and dampers 1400 located on a side of at least one of the plurality of battery cells 1100 and including a non-Newtonian fluid material.

The plurality of battery cells 1100 (e.g., including the battery cells 100 described in FIGS. 1 to 5) are arranged in a direction and accommodated in the housing 1200. For example, if each of the battery cells 1100 is formed in a prismatic shape, the plurality of battery cells 1100 may be disposed with wide surfaces thereof facing each other.

The housing 1200 (e.g., including the housing 1061 to 1065 described in FIG. 5) accommodates the plurality of battery cells 1100. In an embodiment, for example, the housing 1200 is formed to enclose side surfaces and/or lower surfaces of the battery cells 1100, which are arranged in a direction.

The housing 1200 includes, for example, a lower plate formed on the lower surfaces of the plurality of battery cells 1100.

In an embodiment, for example, the housing 1200 includes end plates located at ends of the plurality of battery cells 1100, in the direction in which the battery cells 1100 are arranged. For example, the end plate may be formed to face the wide surface among side surfaces of the battery cell 1100. A side of the end plate may be connected to the lower plate.

In an embodiment, for example, the housing 1200 includes side plates located alongside the plurality of battery cells 1100, in a direction perpendicular to the direction in which the battery cells 1100 are arranged. For example, the side plate may be formed to face a narrow surface among the side surfaces of the battery cell 1100. A side of the side plate may be connected to the lower plate. In the side plate, another side and a side opposite thereto may be connected to the end plates, respectively.

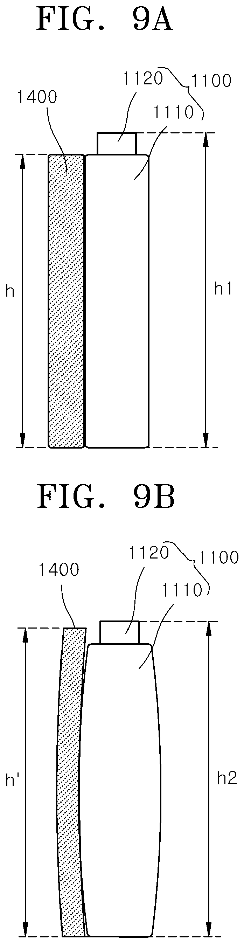

In an embodiment, the battery module 1000 may further include bus bars 1300 that electrically connect some of the plurality of battery cells 1100. For example, the bus bars 1300 may be bonded to terminals (e.g., terminals 1120 to be described in FIGS. 9A and 9B) of the battery cell 1100. For example, the bus bars 1300 may be bonded to the respective terminals of two adjacent battery cells 1100 to electrically connect the two adjacent battery cells 1100. The bus bars 1300 may ensure that the battery cells 1100 are electrically connected to the outside.

The damper 1400 is located on a side of at least one of the plurality of battery cells 1100.

In an embodiment, for example, the damper 1400 may be located on a side of each of the plurality of battery cells 1100.

In an embodiment, for example, the dampers 1400 may be located on both, or opposite, sides of each of the plurality of battery cells 1100. In this case, the damper (e.g., a damper 1401) may be located on a side of a battery cell (e.g., a battery cell 1100a) and located on another side of another battery cell (e.g., a battery cell 1100b).

In an embodiment, for example, the damper 1400 may be located on a side of each of some of the plurality of battery cells 1100. In this case, the dampers 1400 may or may not be located between the plurality of battery cells 1100.

In an embodiment, for example, the damper 1400 may be located between the housing 1200 and each of the plurality of battery cells 1100. For example, the damper (e.g., a damper 1402) may be located between the battery cell (e.g., the battery cell 1100b) and the housing (e.g., the housing 1200).

If at least one of the plurality of battery cells 1100 expands in volume, the damper 1400 contracts in volume. For example, the damper 1400 may contract in volume by as much as the battery cell 1100 expands in volume. For example, the volume of all the dampers 1400 included in the battery module 1000 may be reduced by as much as the volume of all the battery cells 1100 included in the battery module 1000 expands. That is, the total amount of volume expansion of the plurality of battery cells 1100 may be equal to the total amount of volume contraction of a plurality of dampers 1400.

In an embodiment, for example, the damper 1400 may include a non-Newtonian fluid material. According to the present invention, a non-Newtonian fluid is a fluid that does not follow Newton's law of viscosity, that is, it has variable viscosity dependent on stress. In particular, the viscosity of non-Newtonian fluids can change when subjected to force.

In an embodiment, the non-Newtonian fluid material includes, for example, at least one of a D3O solution(Commercially available shear-thickening material, such as D3O^{®} (D3O Lab Ltd., UK)), a cornstarch solution, a colloidal solution, or a combination thereof. D3O is called a shock-absorbing intelligent polymer. D3O is based on the concept of "displacement" and has the function of absorbing and dispersing shock by transforming its molecular structure when an external impact occurs. D3O is a type of non-Newtonian fluid whose viscosity changes depending on the applied force. When at rest or when a weak force is applied, D3O behaves like a liquid and flows freely, but when a sudden force such as an impact is applied, D3O hardens quickly. D3O consists of polymer chains suspended in a liquid matrix. When force is applied to the material, the polymer chains temporarily link together to form a rigid structure that absorbs and dissipates impact energy; when the force is removed, the polymer chains return to their original state, and the material becomes soft and flexible again.

In an embodiment, for example, the damper 1400 may include a material with a modulus of elasticity greater than or equal to 0.5 MPa. If the material included in the damper 1400 has a modulus of elasticity less than 0.5 MPa, the damper 1400 may be insufficiently resistant to external forces. In this case, the damper 1400 may not contract sufficiently or may fail to return to its original state, and thus may be unable to support the exterior of the battery module 1000. Thus, in an embodiment, the material included in the damper 1400 has a modulus of elasticity greater than or equal to 0.5 MPa.

In an embodiment, for example, the material included in the damper 1400 may have a thermal conductivity greater than or equal to 0.011 W/mK and less than or equal to 0.7 W/mK. If the material included in the damper 1400 has a thermal conductivity less than 0.011 W/mK, the damper 1400 may have a reduced ability to absorb heat. In this case, the damper 1400 may fail to appropriately increase its viscosity even if the temperature of the battery cell 1100 increases. If the material included in the damper 1400 has a thermal conductivity greater than 0.7 W/mK, the damper 1400 may absorb heat and transfer the heat to the adjacent battery cell 100 before increasing its viscosity. In this case, the damper 1400 may fail to perform its insulating function between the battery cells 1100. Accordingly, in an embodiment, the damper 1400 includes a material having a thermal conductivity greater than or equal to 0.011 W/mK and less than or equal to 0.7 W/mK.

Accordingly, the damper 1400 can increase its viscosity when absorbing heat. As a result, even if the battery cell 1100 swells due to rising temperature, the damper 1400 can absorb heat and increase its viscosity, thereby contracting in volume. Further, the damper 1400 may utilize these characteristics to insulate the heat generated by the battery cells 1100. Through this, the damper 1400 may prevent heat from propagating between the battery cells 1100.

For example, as shown in FIG. 6, the battery cell 1100 may have a width of w1 in a normal state in which no swelling has occurred. In this case, the damper 1400 may have a width of w2. In this case, the battery module 1000 may have a length of L. The length of the battery module 1000 is, for example, a length from the end plate on a first side to the end plate on a second side. For example, the length of the battery module 1000 is the shortest length from an inner surface of the end plate on the first side to an inner surface of the end plate on the second side.

For example, as shown in FIG. 7, all or some of the plurality of battery cells 1100 may experience an increase in temperature and/or swelling. The battery cell 1100 may change in width to w1' as its volume expands. In this case, w1' is greater than w1. In this case, the damper 1400 may change in width to w2' as its volume contracts. In this case, w2' is less than w2. That is, the damper 1400 may contract in volume as the battery cell 1100 expands in volume.

In this case, the battery module 1000 may still have the length L, even though the battery cell 1100 has expanded in volume. That is, as the damper 1400 contracts by as much as the volume expansion of the battery cell 1100, the battery module 1000 may have the same or similar volume as before the swelling of the battery cell 1100.

Further, as a result, the bus bar 1300 may not be damaged even though the battery cell 1100 has swelled. This is because the damper 1400 contracts in volume by as much as the battery cells 1100 expands in volume, thereby maintaining the same or similar spacing between the battery cells 1100.

Further, the dampers 1400 may absorb heat from the plurality of battery cells 1100 to prevent heat propagation between the battery cells 1100.

As described above, even if a swelling phenomenon occurs in the battery cell 1100, the battery module 1000 according to an embodiment of the present invention may resolve a problem of the housing 1200 and/or the bus bar 1300 breaking, due to the damper 1400.

FIGS. 6 and 7 illustrate an example in which the battery cell 1100 according to an embodiment of the present invention is formed in a prismatic or pouch type. In this case, as shown in the drawings, the damper 1400 may be formed in a sheet shape to be located on a side of each of the plurality of battery cells 1100 or therebetween.

In an embodiment, the damper 1400 may be formed in a sheet shape with a thickness of, for example, 12 mm or less. In an embodiment, the damper 1400 may be formed in a sheet shape with a thickness of, for example, 0.3 mm or more. In an embodiment, for example, the damper 1400 may be formed in a sheet shape with a thickness greater than or equal to 0.1 mm and less than or equal to 15 mm. In an embodiment, for example, the damper 1400 may be formed in a sheet shape with a thickness greater than or equal to 0.1 mm and less than or equal to 14 mm. In an embodiment, for example, the damper 1400 may be formed in a sheet shape with a thickness greater than or equal to 0.1 mm and less than or equal to 13 mm. In an embodiment, for example, the damper 1400 may be formed in a sheet shape with a thickness greater than or equal to 0.1 mm and less than or equal to 12 mm. In an embodiment, for example, the damper 1400 may be formed in a sheet shape with a thickness greater than or equal to 0.2 mm and less than or equal to 15 mm. In an embodiment, for example, the damper 1400 may be formed in a sheet shape with a thickness greater than or equal to 0.3 mm and less than or equal to 15 mm. In an embodiment, for example, the damper 1400 may be formed in a sheet shape with a thickness greater than or equal to 0.3 mm and less than or equal to 14 mm. In an embodiment, for example, the damper 1400 may be formed in a sheet shape with a thickness greater than or equal to 0.3 mm and less than or equal to 13 mm. In an embodiment, for example, the damper 1400 may be formed in a sheet shape with a thickness greater than or equal to 0.3 mm and less than or equal to 12 mm. In an embodiment, the damper 1400 may be formed in a sheet shape with a thickness between 0.1 mm to 15 mm, preferably 0.2 mm to 13 mm, more preferably 0.2 mm to 13 mm or 0.3 mm to 12 mm.

In an embodiment, for example, the damper 1400 includes mica, and the damper 1400 may be formed as a sheet having a thickness greater than or equal to 0.3 mm and less than or equal to 12 mm. In an embodiment, for example, the damper 1400 includes aerogel, and the damper 1400 may be formed as a sheet having a thickness greater than or equal to 0.3 mm and less than or equal to 12 mm.

If the thickness of the damper 1400 is less than or equal to 0.1 mm, the damper 1400 may not contract sufficiently in response to the expansion of the battery cell 1100. If the thickness of the damper 1400 is greater than or equal to 15 mm, the damper 1400 reduces volume efficiency of the battery module 1000 compared to that of the battery cell 1100. Accordingly, in an embodiment, the damper 1400 is formed to have a thickness of, for example, greater than or equal to 0.1 mm and less than or equal to 15 mm.

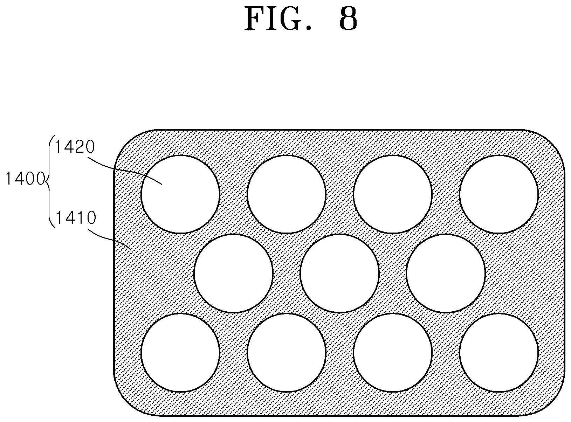

FIG. 8 is a view for describing an example of the damper according to an embodiment of the present invention.

In FIGS. 6 and 7, the example in which the battery cell 1100 is formed in a prismatic or pouch type has been described. FIG. 8 illustrates an example in which the battery cell 1100 is formed in a cylindrical shape.

A battery module 1000 according to an embodiment of the present invention includes a plurality of battery cells 1100, a housing 1200 that accommodates the plurality of battery cells 1100, and a damper 1400 disposed between at least some of the plurality of battery cells 1100 or between the plurality of battery cells 1100 and the housing 1200. In this case, for example, the plurality of battery cells 1100 may each be formed in a cylindrical shape, as shown in FIG. 1.

In FIG. 8, only the damper 1400 is illustrated for convenience of description.

For example, as shown in FIG. 8, the damper 1400 according to an embodiment of the present invention includes a body 1410, and a hole 1420 into which each of a plurality of battery cells 1100 is inserted.

The body 1410 includes a non-Newtonian fluid material. A description of the non-Newtonian fluid material is the same or similar to that provided in FIGS. 6 and 7.

The body 1410 may be formed with a same shape as, for example, an internal shape of the housing 1200. For example, if the housing 1200 has a rectangular shape, the body 1410 may also be formed in a rectangular shape. For example, if the housing 1200 has a circular shape, the body 1410 may also be formed in a circular shape. The body 1410 may be inserted into and fixed to the interior of the housing 1200.

The hole 1420 may be formed in the body 1410. In an embodiment, the hole 1420 may be formed through the body 1410. In an embodiment, the hole 1420 may not pass through the body 1410 but may be formed as a groove in the body 1410. In this case, the body 1410 may also be located below the battery cells 1100, thereby further enhancing an insulating effect and/or a volume retention effect.

The hole 1420 provides a space into which the battery cell 1100 can be inserted in the body 1410.

Accordingly, the shape of the hole 1420 may be formed to correspond to the shape of the battery cell 1100.

Further, for example, the holes 1420 are formed in a number corresponding to the plurality of battery cells 1100 included in the battery module 1000. For example, if the battery module 1000 includes twenty battery cells 1100, the damper 1400 may include twenty holes 1420.

In an embodiment, all or some of the plurality of holes 1420 may be formed to be spaced apart. In an embodiment, for example, all of the plurality of holes 1420 are formed to be spaced apart, and the damper 1400 may be located between all of the plurality of battery cells 1100. In an embodiment, for example, only some of the plurality of holes 1420 are formed to be spaced apart, and the damper 1400 may be located between some of the plurality of battery cells 1100 and may not be located between some others thereof.

With this configuration, the damper 1400 can effectively address swelling and improve the insulating effect even in the battery module 1000 that includes the battery cells 1100 each formed in a cylindrical shape.

However, unlike what is shown in FIG. 8, the damper 1400 may be formed in a sheet shape as shown in FIGS. 6 and 7, even if the battery cell 1100 is formed, for example, in a cylindrical shape. In this case, the damper 1400 may be provided in a state of being inserted on at least one side of each of at least some of the plurality of battery cells 1100.

FIGS. 9A and 9B are views for describing a size of the damper according to an embodiment of the present invention.

In FIGS. 9A and 9B, "1100" denotes a battery cell (e.g., including the battery cells described in FIGS. 1 to 8). In addition, in FIGS. 9A and 9B, "1400" denotes a damper (e.g., including the dampers described in FIGS. 6 to 8).

Each of a plurality of battery cells 1100 includes an electrode assembly (not shown, for example, the electrode assembly described in FIGS. 1 to 4), a case 1110 (e.g., the case described in FIGS. 1 to 4) that accommodates the electrode assembly, and a terminal 1120 (e.g., including the negative electrode terminal and the positive electrode terminal described in FIGS. 1 to 4) that are electrically connected to the electrode assembly and protrude outside the case).

The terminal 1120 is provided, for example, on an upper surface of the case 1110. For example, the terminal 1120 is formed to protrude upward from the upper surface of the case 1110.

FIG. 9A illustrates a normal state in which the plurality of battery cells 1100 have not swelled.

If the plurality of battery cells 1100 are in the normal state, the damper 1400 is formed with a height less than or equal to a height of the case 1110 of the adjacent battery cell.

For example, the case 1110 and the terminal 1120 of the battery cell are formed with a height of h1. In addition, for example, the damper 1400 is formed with a height of h. In this case, the height h of the damper is less than or equal to the height h1 of the case 1110 of the battery cell. As described above, the damper 1400 is formed to be spaced by a certain distance from the bus bar 1300. As a result, even if the height of the damper 1400 increases as the damper 1400 contracts in width, interference of the damper 1400 with the bus bar 1300 may be prevented.

FIG. 9B illustrates a state in which at least one of the plurality of battery cells 1100 swells.

If at least one of the plurality of battery cells 1100 swells, the damper 1400 may be deformed to a height less than or equal to that of the terminal 1120 of the adjacent battery cell.

For example, the terminal 1120 of the battery cell is formed with a height of h2. Further, for example, if the battery cell 1100 expands, the damper 1400 may elongate in a height direction while contracting in transverse width. In this case, the damper 1400 may be deformed to a height of h' as the volume contracts. At this time, the height h' of the deformed damper is less than or equal to the height h2 of the terminal 1120 of the battery cell. Thus, the damper 1400 can sufficiently contract without coming into contact with and/or interfering with the bus bar 1300.

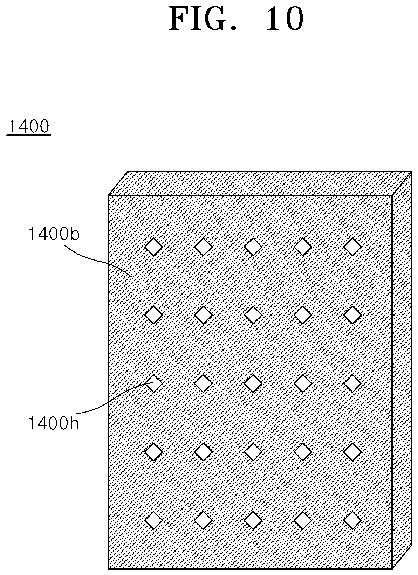

FIG. 10 is a view for describing an example of the damper according to an embodiment of the present invention.

In FIG. 10, "1400" denotes a damper (e.g., including the dampers described in FIGS. 6 to 9).

As described above, the damper 1400 includes a non-Newtonian fluid material. Accordingly, the damper 1400 provides excellent shock absorption and/or thermal insulating effects.

As shown in FIG. 10, the damper 1400 according to an embodiment of the present invention may have a mesh structure in which pores are formed in at least a portion thereof. For example, the damper 1400 includes a body 1400b and a plurality of pores 1400h formed in the body 1400b.

The body 1400b includes a non-Newtonian fluid material.

The pores 1400h may be formed in all or a portion of the body 1400b. The pores 1400h may be formed, for example, on inner or outer surface of the body 1400b, and may be formed on an upper surface, a side surface, and/or a lower surface of the body 1400b.

For example, the damper 1400 can further provide a ventilation effect through the pores 1400h. With such a structure, the battery module 1000 according to an embodiment of the present invention can enhance cooling efficiency, in addition to shock absorption and/or thermal insulating effects.

According to one or more embodiments of the present invention, a bus bar may not be damaged even if a battery cell swells.

According to one or more embodiments of the present invention, a housing may not be damaged even if a battery cell swells.

According to one or more embodiments of the present invention, a battery module with improved safety is provided.

According to one or more embodiments of the present invention, a battery module with reduced risk of heat propagation is provided.

However, it will be appreciated by persons skilled in the art that aspects and effects that can be achieved through the present invention are not limited to those described herein, and other aspects, effects, and advantages of the present invention will be more clearly understood from the detailed description.

Although the present invention has been described with reference to some example embodiments and drawings, the present invention is not limited thereto and may be variously implemented by those of ordinary skill in the art to which the present invention pertains within the technical idea of the present invention and equivalents of the claims.

## Claims

1. A battery module (1000) comprising:
a plurality of battery cells (1100);
a housing (1200) accommodating the plurality of battery cells (1100); and
a damper (1400) located on a side of at least one of the plurality of battery cells (1100) and comprising a non-Newtonian fluid material.

2. The battery module (1000) as claimed in claim 1, wherein the damper (1400) is configured to contract if at least one of the plurality of battery cells (1100) expands.

3. The battery module (1000) as claimed in claim 1, wherein the non-Newtonian fluid material comprises at least one of a D3O solution, a cornstarch solution, and a colloidal solution.

4. The battery module (1000) as claimed in claim 1 or 2, wherein
each of the plurality of battery cells (1100) comprises an electrode assembly (40), a case (50) accommodating the electrode assembly (40), and a terminal (1120) electrically connected to the electrode assembly (40) and protruding to an outside of the case (50), and
if the plurality of battery cells (1100) are in a normal state, the damper (1400) has a height less than or equal to a height of the case (50) of an adjacent battery cell (100) of the plurality of battery cells (1100).

5. The battery module (1000) as claimed in claim 4, wherein, if the plurality of battery cells (1100) are in a swollen state, the damper (1400) is deformed to a height less than or equal to that of the terminal (1120) of the adjacent battery cell (100).

6. The battery module (1000) as claimed in any of claims 1 to 5, wherein each of the plurality of battery cells (1100) is a pouch type battery cell or a prismatic type battery cell.

7. The battery module (1000) as claimed in claim 6, wherein the damper (1400) has a sheet shape with a thickness greater than or equal to 0.3 mm and less than or equal to 12 mm.

8. The battery module (1000) as claimed in any of claims 1 to 7, wherein each of the plurality of battery cells (1100) has a cylindrical shape.

9. The battery module (1000) as claimed in claim 8, wherein the damper (1400) comprises a body (1410) and a hole (1420) in which a battery cell (1100) of the plurality of battery cells (1100) is inserted.

10. The battery module (1000) as claimed in any of claims 1 to 9, wherein the damper (1400) comprises a material having a modulus of elasticity greater than or equal to 0.5 MPa.

11. The battery module (1000) as claimed in any of claims 1 to 10, wherein the damper (1400) comprises a material having a thermal conductivity greater than or equal to 0.7 W/mK and less than or equal to 0.011 W/mK.

12. The battery module (1000) as claimed in any of claims 1 to 11, wherein the damper (1400) has a mesh structure in which pores (1400h) are located in at least a portion thereof.

13. The battery module (1000) as claimed in any of claims 1 to 12, wherein the damper (1400) comprises aerogel, and is formed as a sheet having a thickness greater than or equal to 0.3 mm and less than or equal to 12 mm.

14. The battery module (1000) as claimed in any of claims 1 to 13, wherein the battery module (1000) further comprises terminal portions (1011, 1012), connection tabs (1020) each connecting adjacent battery cells (100), and a protection circuit module (1030) having a side end portion connected to the connection tabs (1020).

15. The battery module (1000) as claimed in claim 13, wherein the protection circuit module (1030) comprises a first protection circuit module (1030a) and a second protection circuit module (1030b) extending at different positions in a direction in which the plurality of battery cells (1100) are arranged.
